(19) Europäisches Patentamt
European Patent Office
Office européen des brevets

(11) **EP 3 351 353 A1**

(12) **EUROPEAN PATENT APPLICATION**

(43) Date of publication:
**25.07.2018 Bulletin 2018/30**

(51) Int Cl.:
***B25J 9/16*** (2006.01)

(21) Application number: **18150138.8**

(22) Date of filing: **03.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.01.2017 JP 2017008955**

(71) Applicant: **Canon Kabushiki Kaisha
Tokyo, Tokyo 146-8501 (JP)**

(72) Inventor: **TSUZAKI, Ryoichi
Tokyo, Tokyo 146-8501 (JP)**

(74) Representative: **TBK
Bavariaring 4-6
80336 München (DE)**

(54) **ROBOT CONTROL APPARATUS, ROBOT SYSTEM, ROBOT CONTROL METHOD AND ASSEMBLY MANUFACTURING METHOD**

(57) A robot control apparatus (300) includes an instruction portion (501), and a control portion (510). The instruction portion (501) is configured to transmit a switching condition to the control portion (510) configured to perform feedback control in accordance with the robot program. In a state where a status of the robot (200) matches the switching condition, the control portion (510) transmits information indicating that the status of the robot (200) has matched the switching condition to the instruction portion (501), the instruction portion (501) transmits an operation command corresponding to the information to the control portion (510), and the control portion (510) switches the operation of the robot (200) in accordance with the operation command.

FIG.3

**Description**

BACKGROUND OF THE INVENTION

Field of the Invention

The present invention relates to robot control.

Description of the Related Art

Robots are controlled by either position control or force control. Position control refers to controlling a robot to a target position based on a position command value. Force control includes position-based force control, that is, admittance control, and torque-based force control. Position-based force control refers to computing a position command value that models after a workpiece based on a value of a force sensor provided at a tip portion of the robot, and controlling the robot based on the position command value. In position-based force control, position control is utilized as a minor loop. Therefore, responsiveness of position-based force control is deteriorated compared to the responsiveness of position control. In general, response frequency of position control is restricted by natural frequency of a robot. Especially, during contact, it is difficult to improve the responsiveness due to the problem of stability. In torque-based force control, a torque command value that models after a workpiece is computed, and the robot is controlled based on the torque command value. Torque-based force control enables to enhance the responsiveness without being restricted by the natural frequency of the robot. Torque-based force control has higher responsiveness than position-based force control, so the range of application can be widened, for example, in assembling operation and the like.
Publication of Japanese Patent No. 5845311 discloses performing flexible control of a robot as force control of the robot. Publication of Japanese Patent No. 5845311 discloses a user having a plurality of parameter sets related to flexible control stored in a storage unit. Further, publication of Japanese Patent No. 5845311 discloses an operation status monitor portion configured to determine an operation status of the robot based on an output from an encoder, a force sensor, or a time measurement portion for measuring time. Further, publication of Japanese Patent No. 5845311 discloses that when a switching condition for switching the parameter set is satisfied while the robot is executing flexible control using a certain parameter set, the robot executes flexible control by switching the parameter set to a different parameter set.
The processing that instructs to switch the operation of the robot according to a robot program has a high arithmetic operation load, since there is a need to interpret the robot program. Meanwhile, in order to perform torque-based force control in a stable manner, there is a need to perform a feedback control process based on the torque sensor value and the encoder value by a fast control cycle. According to the conventional method, however, feedback control is performed while executing the processing of the robot program having a high arithmetic operation load, so that there were limitations in increasing the speed of the control cycle of feedback control according to the torque-based force control.

SUMMARY OF THE INVENTION

The present invention in its first aspect provides a robot control apparatus as specified in claims 1 to 11.
The present invention in its second aspect provides a robot system as specified in claim 12.
The present invention in its third aspect provides a robot control method as specified in claims 13.
The present invention in its fourth aspect provides an assembly manufacturing method as specified in claims 14.
Further features of the present invention will become apparent from the following description of exemplary embodiments with reference to the attached drawings.

BRIEF DESCRIPTION OF THE DRAWINGS

FIG. 1 is a perspective view of a robot system according to a first embodiment.
FIG. 2 is a block diagram illustrating a robot control apparatus according to the first embodiment.
FIG. 3 is a control block diagram illustrating a control system of the robot system according to the first embodiment.
FIG. 4 is a flowchart illustrating a torque-based force control of a robot according to the first embodiment.
FIG. 5 is a flowchart illustrating a position control of a robot according to the first embodiment.
FIG. 6A is a conceptual diagram illustrating a flow of control of the instruction portion and the control portion in a state where torque-based force control is performed, showing a case where an instruction portion transmits a switching condition to a control portion.

FIG. 6B is a conceptual diagram illustrating a flow of control of the instruction portion and the control portion in a state where torque-based force control is performed, showing a case where the control portion transmits a switching information to the instruction portion.

FIG. 6C is a conceptual diagram illustrating a flow of control of the instruction portion and the control portion in a state where torque-based force control is performed, showing a case where the instruction portion transmits an operation command to the control portion.

FIG. 6D is a conceptual diagram illustrating a flow of control of the instruction portion and the control portion in a state where torque-based force control is performed, showing a case where the control portion switches operation of the robot.

FIG. 7 is a control block diagram of the instruction portion and the control portion according to the first embodiment.

FIG. 8 is a schematic diagram illustrating a state immediately before performing assembling operation by a robot according to the first embodiment.

FIG. 9 is an explanatory view illustrating one example of a robot program according to the first embodiment.

FIG. 10A is a schematic diagram of a robot for describing the assembling operation of the robot operated in accordance with a robot program, illustrating a state where a bottom face of a workpiece W1 is assembled to a workpiece W2.

FIG. 10B is a schematic diagram of a robot for describing the assembling operation of a robot operated in accordance with the robot program, illustrating a state where assembly of the workpiece has failed.

FIG. 11 is a schematic diagram illustrating a state immediately before performing assembling operation by a robot according to a second embodiment.

FIG. 12 is an explanatory view illustrating one example of a robot program according to the second embodiment.

FIG. 13A is a schematic diagram of a robot for describing the assembling operation of a robot operated in accordance with the robot program, illustrating a state where the bottom face of the workpiece W1 has abutted against a workpiece W3.

FIG. 13B is a schematic diagram of a robot for describing the assembling operation of the robot operated in accordance with the robot program, illustrating a state where the bottom face of the workpiece W1 has entered a recess portion of the workpiece W3.

FIG. 13C is a schematic diagram of a robot for describing the assembling operation of the robot operated in accordance with the robot program, illustrating a state where the workpiece W1 is fit to the recess portion of the workpiece W3.

FIG. 14 is a control block diagram of an instruction portion and a control portion according to a third embodiment.

FIG. 15A is a view illustrating a force target value $F_{ref}$ of a tip of hand in a case where interpolation of force target value has not been performed.

FIG. 15B is a schematic diagram illustrating a time variation of a hand tip force F according to the case of FIG. 15A.

FIG. 15C is a schematic diagram illustrating a time variation of a force target value $F_{ref}$ of the tip of hand in a case where interpolation of the force target value has been performed.

FIG. 15D is a schematic diagram illustrating a time variation of the hand tip force F according to the case of FIG. 15C.

FIG. 16 is an explanatory view illustrating one example of a robot program according to a fourth embodiment.

FIG. 17 is a conceptual diagram illustrating a determination on whether a switching condition had been matched according to the fourth embodiment.

DESCRIPTION OF THE EMBODIMENTS

Now, embodiments for carrying out the present invention will be described in detail with reference to the drawings.

First Embodiment

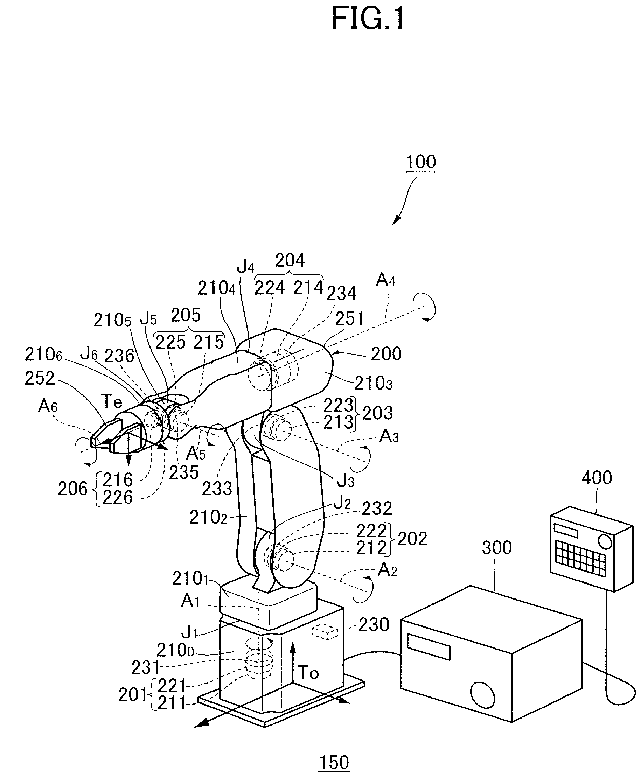

FIG. 1 is a perspective view of a robot system according to a first embodiment. As illustrated in FIG. 1, a robot system 100 includes an articulated robot 200, and a robot control apparatus 300 configured to control operation of the robot 200. Further, the robot system 100 includes a teaching pendant 400 serving as a teaching apparatus configured to transmit teaching data to the robot control apparatus 300. The teaching pendant 400 is operated by an operator, and it is used to designate the operation of the robot 200 and the robot control apparatus 300.

The robot 200 includes a vertical articulated robot arm 251, and a robot hand 252 serving as an example of an end effector attached to a leading end of the robot arm 251. Hereafter, we will describe a case where the end effector is the robot hand 252, but the present invention is not restricted to robot hands, and it can be other tools such as a driver. A base end of the robot arm 251 is fixed to a base 150. The robot hand 252 is configured to hold objects such as components and tools.

The robot 200, that is, the robot arm 251, includes a plurality of joints, for example, six joints $J_1$ through $J_6$. The robot arm 251 includes a plurality of, such as six, servomotors 201 through 206 that respectively drive each of the joints

$J_1$ through $J_6$ to rotate around each of the joint shafts $A_1$ through $A_6$. The robot arm 251 is configured such that a plurality of links $210_0$ through $210_6$ are connected rotatably at each of the joints $J_1$ through $J_6$. The robot arm 251 can move a tip of hand of the robot 200 to an arbitrary three-directional posture at an arbitrary three-dimensional position as long as it is within a movable range.

The position and the posture of the tip of hand of the robot 200 is expressed by a coordinate system To, with the base end of the robot arm 251, that is, the base 150, as reference. A coordinate system Te is set to the tip of hand of the robot 200. In the first embodiment, the tip of hand of the robot 200 refers to the robot hand 252 if the robot hand 252 is not holding an object. If the robot hand 252 is holding an object, the tip of hand of the robot 200 refers to the robot hand 252 and the object that the robot hand 252 is holding. In other words, regardless of whether the robot hand 252 is in a state holding an object or in a state not holding an object, the tip of hand refers to a portion ahead if the end of the robot arm 251 toward the distal end of the robot 200.

The respective servomotors 201 through 206 include motors 211 through 216 serving as electric motors for respectively driving the joints $J_1$ through $J_6$, and sensor units 221 through 226 respectively connected to the motors 211 through 216. The respective sensor units 221 through 226 have an encoder serving as a position sensor configured to generate a signal corresponding to the position, that is, angle, of each joint $J_1$ through $J_6$. The respective sensor units 221 through 226 have torque sensors that generate signals corresponding to the torque of respective joints $J_1$ through $J_6$. The respective servomotors 201 through 206 have reduction gears not shown, and are connected either directly or through a transmission mechanism such as a belt or a bearing not shown to the links driven by the respective joints $J_1$ through $J_6$.

A servo controller 230 configured to control operation of motors 211 through 216 of the respective servomotors 201 through 206 is arranged inside the robot arm 251. Based on respective torque command values corresponding to respective joints $J_1$ though $J_6$ being received, the servo controller 230 supplies current to the respective motors 211 through 216 such that the torque of the respective joints $J_1$ through $J_6$ follow the torque command value, and controlling the drive of the respective motors 211 through 216. In the first embodiment, the servo controller 230 is arranged inside the robot arm 251, but it can also be arranged on the outer side of the robot arm 251, such as within a housing of the robot control apparatus 300.

Further, the robot arm 251 of the robot 200 includes a plurality of brakes 231 through 236 that respectively apply braking force to the respective joints $J_1$ through $J_6$. The brakes 231 through 236 are, for example, disk brakes. By activating the respective brakes 231 through 236, the respective joints $J_1$ through $J_6$ can be fixed such that the joints $J_1$ through $J_6$ do not move.

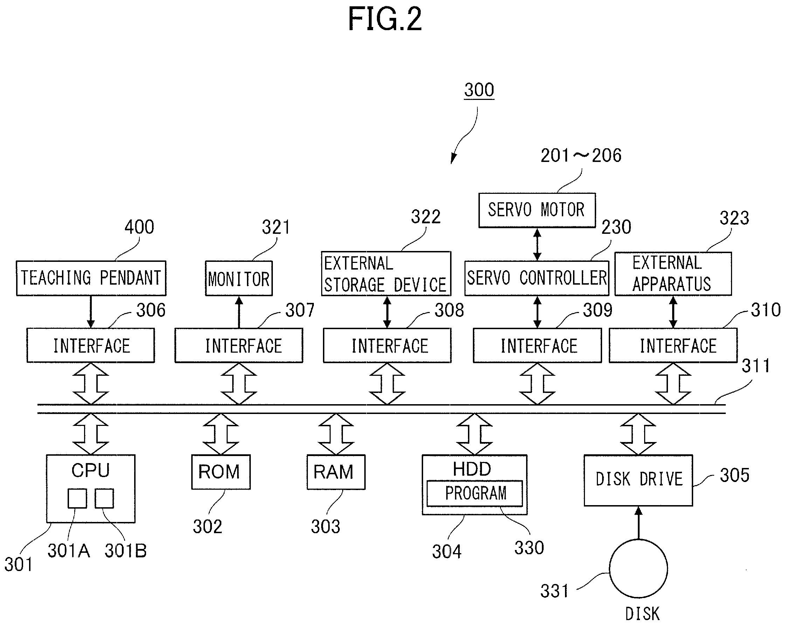

Next, we will describe the robot control apparatus 300. FIG. 2 is a block diagram illustrating the robot control apparatus 300 according to the first embodiment. The robot control apparatus 300 is configured of a computer, and includes a CPU (Central Processing Unit) 301. Further, the robot control apparatus 300 includes, as storage unit, a ROM (Read Only Memory) 302, a RAM (Random Access Memory) 303 and an HDD (Hard Disk Drive) 304 serving as internal storage apparatuses. Even further, the robot control apparatus 300 includes a disk drive 305 and interfaces 306 through 310. The CPU 301, the ROM 302, the RAM 303, the HDD 304, the disk drive 305 and the interfaces 306 through 310 are mutually connected through a bus 311 in a communicatable manner.

The CPU 301 includes a plurality of cores 301A and 301B according to the first embodiment, and each core 301A and 301B can perform arithmetic operation independently. The ROM 302 stores a basic program. The RAM 303 is a storage device that temporarily stores various data, such as the result of arithmetic operation processing performed by the CPU 301. The HDD 304 is a storage device that stores the result of arithmetic operation processing performed by the CPU 301, or various data acquired from the exterior, and also stores a program 330 for having the CPU 301 execute the arithmetic operation processing described later. The CPU 301 executes the respective steps of the robot control method based on the program 330 stored in the HDD 304. The disk drive 305 can read the various data and programs stored in a disk 331.

The teaching pendant 400 is connected to the interface 306. The CPU 301 receives input of teaching data from the teaching pendant 400 through the interface 306 and the bus 311.

The servo controller 230 is connected to the interface 309. The CPU 301 acquires signals from respective sensor units 221 through 226 through the servo controller 230, the interface 309 and the bus 311. Further, the CPU 301 outputs command value data of the respective joints at predetermined time intervals through the bus 311 and the interface 309 to the servo controller 230.

A monitor 321 is connected to the interface 307, and various images are displayed on the monitor 321 under the control of the CPU 301. The interface 308 is configured to allow connection of an external storage device 322 serving as a storage such as a rewritable nonvolatile memory or an external HDD.

An external apparatus 323 is connected to the interface 310. The CPU 301 performs input/output of data with the external apparatus 323 through the interface 310 and the bus 311. The external apparatus 323 can be, for example, an apparatus for turning an LED on and off, or a PLC (Programmable Logic Control Portion).

In the first embodiment, a case is described where the computer-readable storage medium is the HDD 304 and the program 330 is stored in the HDD 304, but the present invention is not restricted thereto. The program 330 can be stored in any storage medium, as long as it is a computer-readable storage medium. For example, the ROM 302, the disk 331, the external storage device 322 and the like illustrated in FIG. 2 can be utilized as the storage medium for storing the program 330. Various examples of the storage medium including a flexible disk, a hard disk, an optical disk such as a DVD-ROM or a CD-ROM, a magneto-photo disk, a magnetic tape, a nonvolatile memory, and so on can be used.

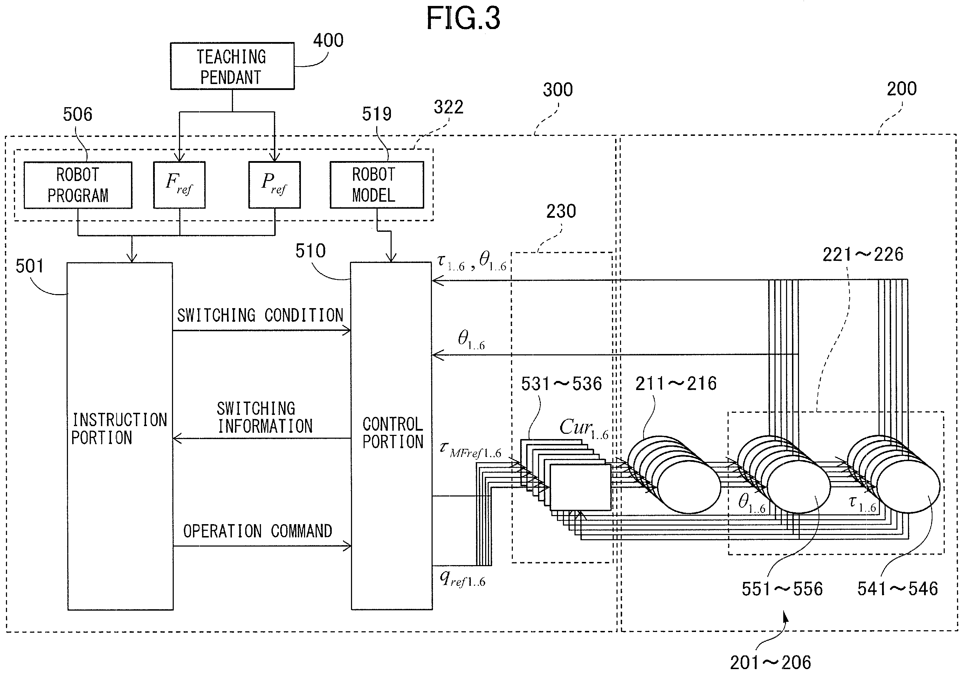

FIG. 3 is a control block diagram illustrating a control system of the robot system 100 according to the first embodiment. The CPU 301 of the robot control apparatus 300 functions as an instruction portion 501 and a control portion 510 by executing the program 330. In the first embodiment, a core 301A of the CPU 301 functions as the instruction portion 501, and the core 301B of the CPU 301 functions as the control portion 510. The servo controller 230 includes a plurality of, that is, in the present example having six joints, six, motor controllers 531 through 536.

The respective sensor units 221 through 226 include encoders 551 through 556 and torque sensors 541 through 546. The encoders 551 through 556 are rotary encoders, and the respective encoders output angular values $\theta_1$ through $\theta_6$, which are measured values corresponding to rotation angles of the motors 211 through 216, as signals. The respective torque sensors 541 through 546 output torque values $\tau_1$ through $\tau_6$, which are measured values corresponding to torques of the respective joints $J_1$ through $J_6$, as signals.

Based on the operation of an operator, the teaching pendant 400 sets a force target value $F_{ref}$, which is a target value of force acting on a tip of hand of the robot 200, to the robot control apparatus 300, that is, stores the force target value $F_{ref}$ in the external storage device 322. Further, the teaching pendant 400 sets a position target value $P_{ref}$, which is a target value of position and posture of the tip of hand of the robot 200, to the robot control apparatus 300, that is, stores the position target value $P_{ref}$, in the external storage device 322. A plurality of force target values $F_{ref}$ and position target values $P_{ref}$ exist in accordance with the assembly process. Further, a robot program 506 described in robot language and a robot model 519 such as a three-dimensional CAD data of the robot 200 are stored in the external storage device 322. The robot program 506 specifies the operations of the robot 200 and the external apparatus 323. The operator creates the robot program in accordance with the assembly process using a text editor or a dedicated IDE (Integrated Development Environment). The robot program 506 can be used in association with the force target value $F_{ref}$ and the position target value $P_{ref}$. The force target value $F_{ref}$, the position target value $P_{ref}$, the robot program 506 and the robot model 519 are described as being stored in the external storage device 322, but they can also be stored in the internal storage device.

The instruction portion 501 is configured to output an instruction regarding operation of the robot 200 in accordance with the robot program 506 to the control portion 510, and since the instruction portion 501 interprets the robot program 506, the arithmetic operation load thereof will be higher than the control portion 510.

In accordance with the instruction of the instruction portion 501, the control portion 510 controls the operation of the robot 200 selectively based on either a force control serving as a first control or a position control serving as a second control. In the first embodiment, the force control is a torque-based force control. According to the torque-based force control, the operation of the robot 200 is subjected to feedback control based on torque values $\tau_1$ through $\tau_6$ of the torque sensors 541 through 546 of the robot 200 and the angular values $\theta_1$ through $\theta_6$ of the encoders 551 through 556 of the robot 200. According to the position control, the operation of the robot 200 is subjected to feedback control based on angular values $\theta_1$ through $\theta_6$ of the encoders 551 through 556 of the robot 200.

In the torque-based force control, the control portion 510 acquires torque command values $\tau_{MFref1}$ through $\tau_{MFref6}$ of the respective joints as feedback command values, and outputs the respective torque command values $\tau_{MFref1}$ through $\tau_{MFref6}$ to the respective motor controllers 531 through 536. The control portion 510 executes torque-based force control at predetermined control cycles. Further, according to the position control, the control portion 510 acquires angular command values $q_{ref1}$ through $q_{ref6}$ of the respective joints as feedback command values, and outputs the respective angular command values $q_{ref1}$ through $q_{ref6}$ to the respective motor controllers 531 through 536.

Now, a case where the command values received by the respective motor controllers 531 through 536 are the torque command values $\tau_{MFref1}$ through $\tau_{MFref6}$ will be described. The respective motor controllers 531 through 536 control respective currents $Cur_1$ through $Cur_6$ supplied to the respective motors 211 through 216 such that deviations between the respective torque values $\tau_1$ through $\tau_6$ and the respective torque command values $\tau_{MFref1}$ through $\tau_{MFref6}$ become small.

Now, a case where the command values received by the respective motor controllers 531 through 536 are the angular command values $q_{ref1}$ through $q_{ref6}$ will be described. The respective motor controllers 531 through 536 convert the respective angular command values $q_{ref1}$ through $q_{ref6}$ to angular command values $\theta_{ref1}$ through $\theta_{ref6}$ of the respective motors 211 through 216. Then, the respective motor controllers 531 through 536 control respective currents $Cur_1$ through $Cur_6$ supplied to the respective motors 211 through 216 such that the deviations between the respective angular values $\theta_1$ through $\theta_6$ and the respective angular command values $\theta_{ref1}$ through $\theta_{ref6}$ become small. Further, the respective motor controllers 531 through 536 can also convert the respective angular values $\theta_1$ through $\theta_6$ to respective angular values $q_1$ through $q_6$. In this case, the respective motor controllers 531 through 536 control the respective currents $Cur_1$ through $Cur_6$ supplied to the respective motors 211 through 216 such that deviations between the respective angular

values $q_1$ through $q_6$ and the angular command values $q_{ref1}$ through $q_{ref6}$ become small.

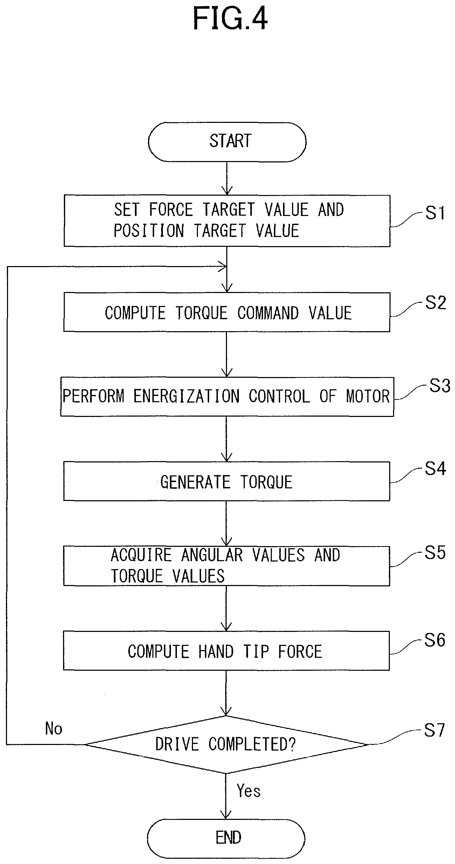

Now, torque-based force control of the robot 200 will be described in detail. FIG. 4 is a flowchart describing the torque-based force control of the robot 200 according to the first embodiment. At first, the operator sets the force target value $F_{ref}$ and the position target value $P_{ref}$ using the teaching pendant 400 (S1). The force target value $F_{ref}$ and the position target value $P_{ref}$ are stored in the external storage device 322. The force target value $F_{ref}$ and the position target value $P_{ref}$ can also be stored in the robot program 506 directly, without using the teaching pendant 400.

The control portion 510 computes torque command values $\tau_{MFref1}$ through $\tau_{MFref6}$ corresponding to the respective motors 211 through 216 such that the hand tip force F, which is the measured value of force acting on the tip of hand, follows the force target value $F_{ref}$, that is, the deviation of force between the hand tip force F and the force target value $F_{ref}$, becomes small (S2).

The respective motor controllers 531 through 536 perform energization control to energize currents $Cur_1$ through $Cur_6$ to the respective motors 211 through 216 such that the respective torque command values $\tau_{MFref1}$ through $\tau_{MFref6}$ are realized, based on angular values $\theta_1$ through $\theta_6$ of the respective encoders 551 through 556 (S3). The respective motors 211 through 216 generate torque by being energized (S4).

The respective encoders 551 through 556 output signals indicating the respective angular values $\theta_1$ through $\theta_6$ to the control portion 510. The respective torque sensors 541 through 546 output signals indicating the respective torque values $\tau_1$ through $\tau_6$ to the control portion 510. Thereby, the angular values $\theta_1$ through $\theta_6$ of the respective encoders 551 through 556 and the torque values $\tau_1$ through $\tau_6$ of the respective torque sensors 541 through 546 are subjected to feedback to the control portion 510, and the control portion 510 acquires the angular values $\theta_1$ through $\theta_6$ and the torque values $\tau_1$ through $\tau_6$ (S5).

The control portion 510 computes angular values $q_1$ through $q_6$ of the respective joints $J_1$ through $J_6$ based on the robot model 519 and the angular values $\theta_1$ through $\theta_6$. Further, the control portion 510 computes a position P of the tip of hand of the robot 200 based on the robot model 519 and the angular values $q_1$ through $q_6$ of the respective joints $J_1$ through $J_6$. The control portion 510 computes a hand tip force F applied on the tip of hand of the robot 200 based on the robot model 519, the angular values $q_1$ through $q_6$ and the torque values $\tau_1$ through $\tau_6$ (S6). The control portion 510 determines whether drive has been completed or not (S7), and if it is not completed (S7: No), steps S2 through S7 are repeated. By driving the motors 211 through 216 in accordance with the above-described flowchart, it becomes possible to control the hand tip force F of the robot 200 to the force target value $F_{ref}$. The torque-based force control is not restricted to the order of the flowchart illustrated in FIG. 4, and it can be in other orders.

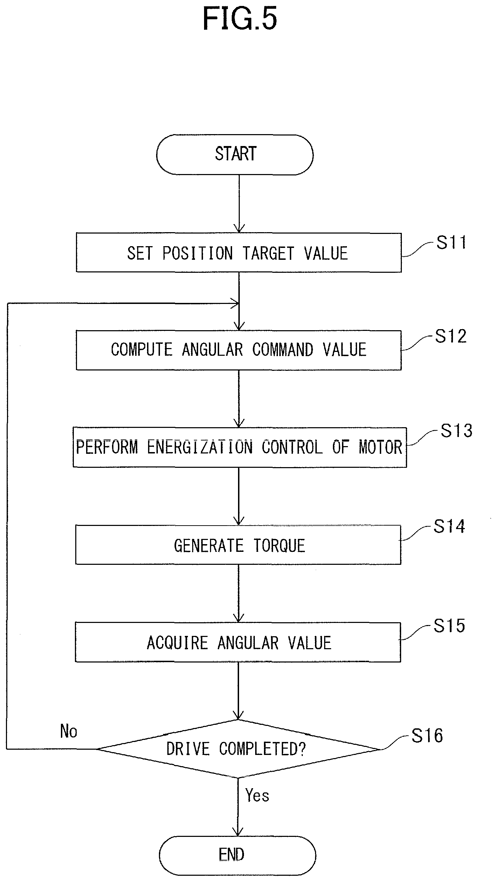

Next, position control of the robot 200 will be described. FIG. 5 is a flowchart illustrating the position control of the robot 200 according to the first embodiment. At first, the operator sets the position target value $P_{ref}$ using the teaching pendant 400 (S11). The position target value $P_{ref}$ is stored in the external storage device 322. The position target value $P_{ref}$ can be stored in the robot program 506 directly without using the teaching pendant 400.

The control portion 510 computes angular command values $q_{ref1}$ through $q_{ref6}$ by converting the position target value $P_{ref}$ into angular command values $q_{ref1}$ through $q_{ref6}$ of the respective joints $J_1$ through $J_6$ based on the robot model 519 (S12).

Respective motor controllers 531 through 536 perform energization control to energize currents $Cur_1$ through $Cur_6$ to the respective motors 211 through 216, so that the respective angular values $q_1$ through q6 follow the respective angular command values $q_{ref1}$ through $q_{ref6}$ (S13) . Angular values $\theta_1$ through $\theta_6$ of the motors 211 through 216 can be used instead of the angular values $q_1$ through $q_6$ as signals indicating the angles of the joints $J_1$ through $J_6$. The respective motors 211 through 216 generate torque by being energized (S14).

The respective encoders 551 through 556 output signals indicating the respective angular values $\theta_1$ through $\theta_6$ to the control portion 510. According thereto, the angular values $\theta_1$ through $\theta_6$ of the respective encoders 551 through 556 are subjected to feedback to the control portion 510, and the control portion 510 acquires the angular values $\theta_1$ through $\theta_6$ (S15). The control portion 510 obtains the angular values $q_1$ through $q_6$ of the respective joints $J_1$ through $J_6$ based on the robot model 519 and angular values $\theta_1$ through $\theta_6$.

The control portion 510 determines whether drive has been completed or not, that is, whether the position P of the tip of hand has reaches near the position target value $P_{ref}$ (S16), and if the drive is not complete (S16: No), steps S12 through S16 are repeated. By driving the motors 211 through 216 in accordance with the above-described flowchart, it becomes possible to control the position P of the tip of hand of the robot 200 to the position target value $P_{ref}$.

The torque-based force control of steps S1 through S7 and the position control of steps S11 through S16 are switched by the instruction portion 501 in accordance with the robot program 506, and either one of the controls is selected according to the operation.

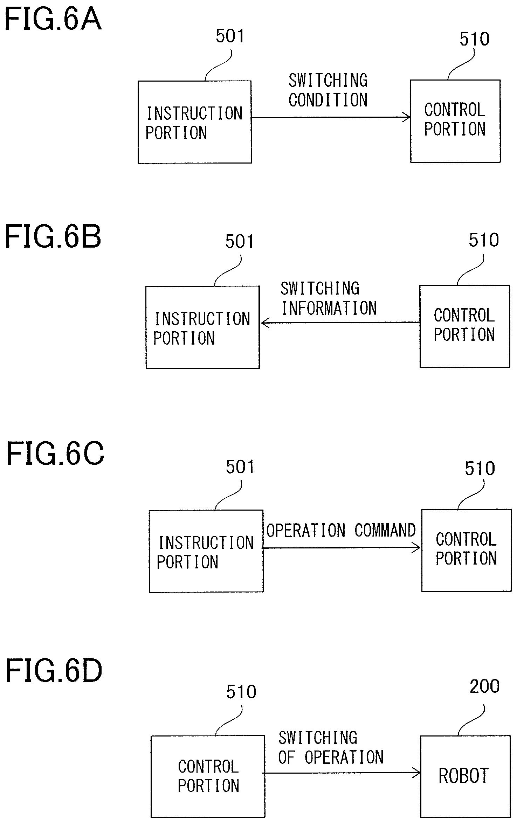

Hereafter, a case where the control portion 510 performs feedback control of the torque-based force control based on the instruction of the instruction portion 501 will be described. FIGs. 6A, 6B, 6C and 6D are conceptual diagrams illustrating the flow of control of the instruction portion 501 and the control portion 510 when torque-based force control is performed. As illustrated in FIG. 6A, the instruction portion 501 transmits a switching condition to the control portion 510 in accordance with the robot program 506. The control portion 510 determines whether the status of the robot 200

has matched the switching condition or not during torque-based force control. If the status of the robot 200 has matched the switching condition, as illustrated in FIG. 6B, the control portion 510 transmits information indicating that the switching condition has been matched, that is, switching information, to the instruction portion 501. The instruction portion 501 transmits an operation command corresponding to the switching information to the control portion 510 in accordance with the robot program 506, as illustrated in FIG. 6C. The control portion 510 switches the operation of the robot 200 in accordance with the operation command, as illustrated in FIG. 6D. As described, the instruction portion 501 performs processing to interpret the robot program 506, and the control portion 510 performs feedback control based on the torque-based force control in accordance with the instruction of the instruction portion 501. As descried, by separating the processing of the instruction portion 501 and the control portion 510, it becomes possible to perform feedback processing having a high arithmetic operation load in an intensive manner. Therefore, feedback control can be performed by a fast control cycle in the control portion 510. Since feedback control is performed by a fast control cycle, even in a case where the force acting on the robot 200 is changed significantly, it becomes possible to respond speedily, and the control of the robot 200 is stabilized. That is, the controllability of the robot 200 is improved. Data such as the switching condition, the switching information and the operation command is transmitted and received by electric signals between the instruction portion 501 and the control portion 510.

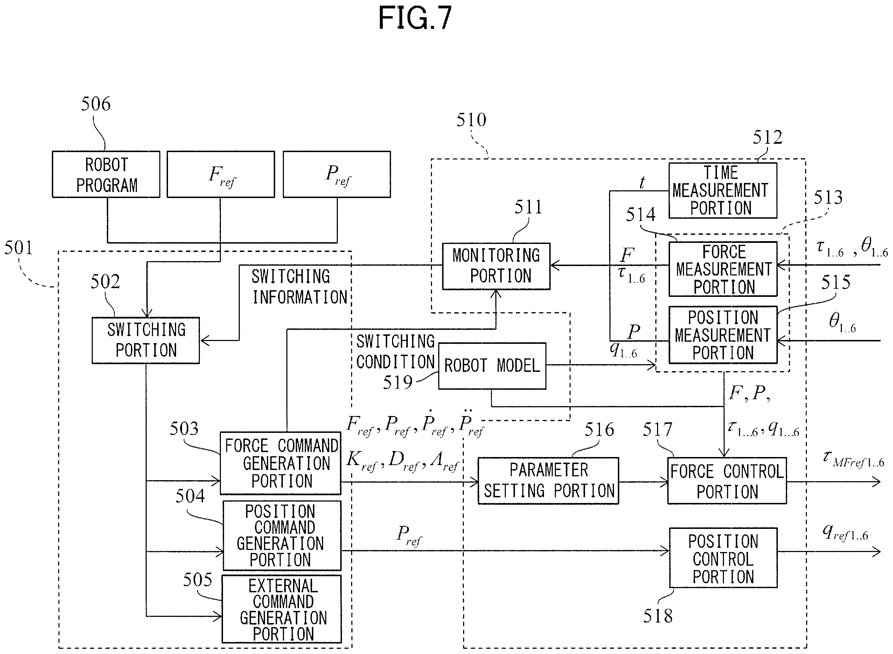

Now, the operation of the instruction portion 501 and the control portion 510 will be described in detail. FIG. 7 is a control block diagram of the instruction portion 501 and the control portion 510 according to the first embodiment. The instruction portion 501 functions as a switching portion 502, a force command generation portion 503, a position command generation portion 504 and an external command generation portion 505. The control portion 510 functions as a monitoring portion 511, a time measurement portion 512, a measurement portion 513, the parameter setting portion 516, a force control portion 517 and a position control portion 518. The measurement portion 513 functions as a force measurement portion 514 and a position measurement portion 515.

The time measurement portion 512 measures the elapsed time t from a point of time when torque-based force control has been started. The measurement portion 513 reads the robot model 519 from the external storage device 322. The position measurement portion 515 computes position P that indicates the measured value of the position and posture of the tip of hand of the robot 200 based on the angular values $\theta_1$ through $\theta_6$ acquired from the encoders 551 through 556, and the robot model 519. Further, upon receiving the respective angular values $\theta_1$ through $\theta_6$, the position measurement portion 515 computes angular values $q_1$ through $q_6$, which are measured values of angles of the respective joints $J_1$ through $J_6$, based on a reduction ratio of a reduction gear not shown and the like specified by the robot model 519. The force measurement portion 514 acquires the hand tip force F, which is a measured value of the force acting on the tip of hand of the robot 200, based on angular values $\theta_1$ through $\theta_6$ acquired from the encoders 551 through 556, the torque values $\tau_1$ through $\tau_6$ acquired from the torque sensors 541 through 546, and the robot model 519.

The switching portion 502 reads the robot program 506, the force target value $F_{ref}$ and the position target value $P_{ref}$, performs interpretation processing thereof, and in accordance with the switching information received from the monitoring portion 511, the switching portion 502 generates an operation instruction of the robot 200 or the external apparatus 323. If the generated operation instruction is a torque-based force control of the robot 200, the switching portion 502 transmits an operation instruction to the force command generation portion 503. If the generated operation instruction is a position control of the robot 200, the switching portion 502 transmits an operation instruction to the position command generation portion 504. If the generated operation instruction is an operation of the external apparatus 323, the switching portion 502 transmits an operation instruction to the external command generation portion 505.

Based on the operation instruction received from the switching portion 502, the force command generation portion 503 transmits the switching condition and a force command as the operation command to the control portion 510. There are 13 kinds of switching conditions according to the first embodiment, as listed below. The force command generation portion 503 transmits the following switching condition to the monitoring portion 511 in accordance with a statement of the robot program 506.

    1. Elapsed time from point of time when torque-based force control was started
    2. Hand tip force of the robot 200
    3. Time differential of hand tip force of the robot 200
    4. Second-order time differential of hand tip force of the robot 200
    5. Position of tip of hand of the robot 200
    6. Speed of tip of hand of the robot 200
    7. Acceleration of tip of hand of the robot 200
    8. Position of each axis of the robot 200
    9. Speed of each axis of the robot 200
    10. Acceleration of each axis of the robot 200
    11. Torque of each axis of the robot 200
    12. Time differential of torque of each axis of the robot 200

13. Second-order time differential of torque of each axis of the robot 200

The switching conditions have been listed as an example, but the present invention is not restricted thereto.
The monitoring portion 511 determines whether the measured value acquired from the time measurement portion 512 and the measurement portion 513 matches the received switching conditions described above. That is, the monitoring portion 511 monitors the measured value described later during torque-based force control, and if the measured value matches the switching condition received from the force command generation portion 503, the monitoring portion 511 transmits a switching information indicating that the measured value has matched the switching condition to the switching portion 502. First-order differential and second-order differential by time described later are performed by the monitoring portion 511.

- Elapsed time t notified from the time measurement portion 512
- Hand tip force F notified from the force measurement portion 514
- Torque values $\tau_1$ through $\tau_6$ of the respective axes notified from the force measurement portion 514
- Position P of the tip of hand notified from the position measurement portion 515
- Respective angular values $q_1$ through $q_6$ notified from the position measurement portion 515
- Time differential of the hand tip force F
- Time differential of the torque values $\tau_1$ through $\tau_6$
- Time differential (speed) of position P of the tip of hand
- Time differential (speed) of the respective angular values $q_1$ through $q_6$
- Second-order time differential of the hand tip force F
- Second-order time differential of the respective torque values $\tau_1$ through $\tau_6$
- Second-order time differential (acceleration) of position P of the tip of hand
- Second-order time differential (acceleration) of the respective angular values $q_1$ through $q_6$

In the first embodiment, a force command serving as an operation command output by the force command generation portion 503 is a parameter in accordance with the torque-based force control. According to the first embodiment, there are seven kinds of parameters, which are listed below.

1. Force target value $F_{ref}$ of tip of hand of the robot 200
2. Position target value $P_{ref}$ of tip of hand of the robot 200
3. Speed target value $P_{ref}(\cdot)$ of tip of hand of the robot 200
4. Acceleration target value $P_{ref}(\cdot\cdot)$ of tip of hand of the robot 200
5. Stiffness coefficient $K_{ref}$ of target at tip of hand of the robot 200
6. Viscosity coefficient $D_{ref}$ of target at tip of hand of the robot 200
7. Inertia matrix $\Lambda_{ref}$ of target at tip of hand of the robot 200

Here, $(\cdot)$ represents the first-order differential of time, and $(\cdot\cdot)$ represents the second-order differential of time. The examples of parameters have been listed above, but the parameters are not restricted to those listed above. Further, not all the parameters are necessary. In the above-listed parameters, the stiffness coefficient $K_{ref}$, the viscosity coefficient $D_{ref}$ and the inertia matrix $\Lambda_{ref}$ are coefficients of arithmetic operation expression expressed in the following expressions (1) and (2) used for the feedback control of the torque-based force control.
Upon receiving the parameters in accordance with force control transmitted from the force command generation portion 503, the parameter setting portion 516 performs coordinate transformation, and sets the value to the force control portion 517. The force control portion 517 receives input of the robot model 519, the force target value $F_{ref}$, the position target value $P_{ref}$, the speed target value $P_{ref}(\cdot)$, the acceleration target value $P_{ref}(\cdot\cdot)$, the stiffness coefficient $K_{ref}$, the viscosity coefficient $D_{ref}$, and the inertia matrix $\Lambda_{ref}$. Further, the force control portion 517 receives input of the torque values $\tau_1$ through $\tau_6$, the angular values $q_1$ through $q_6$, the position P and the force F as measured values. Thereafter, the force control portion 517 computes torque command values $\tau_{MFref1}$ through $\tau_{MFref6}$ corresponding to the respective joints $J_1$ through $J_6$ using these target values and measured values. Now, the deviation between the hand tip force F and the force target value $F_{ref}$ is referred to as a force deviation. The deviation between the position P and the position target value $P_{ref}$ of the tip of hand is referred to as a positional deviation. The deviation between the speed P $(\cdot)$ and speed target value $P_{ref}(\cdot)$ of the tip of hand is referred to as a speed deviation. The deviation between the acceleration value P $(\cdot\cdot)$ and acceleration target value $P_{ref}(\cdot\cdot)$ of the tip of hand is referred to as an acceleration deviation. The force control portion 517 computes the torque command values $\tau_{MFref1}$ through $\tau_{MFref6}$ so that the force deviation, the positional deviation, the speed deviation and the acceleration deviation become small.
Specifically, the force control portion 517 performs calculation using expressions (1) and (2) based on the following variables.

- Force target value $F_{ref}$
- Position target value $P_{ref}$
- Speed target value $P_{ref}$ (·)
- Acceleration target value $P_{ref}$ (··)
- Stiffness coefficient $K_{ref}$
- Viscosity coefficient $D_{ref}$
- Inertia matrix $\Lambda_{ref}$
- Hand tip position P
- Hand tip force F
- Jacobian J (q) computed by robot model 519 and joint speed q (·)
- Inertia matrix M (q) computed by inverse dynamics computation
- Coriolis centrifugal matrix c (q, q (·)) computed by inverse dynamics computation
- Gravity vector g (q) computed by inverse dynamics computation
- Inertia matrix Λ computed based on J (q), M (q) and position P

[Expression 1]

$$\tau_{MFref} = g(q) + J(q)^T (\Lambda(P)\ddot{P}_{ref} + \mu(P,\dot{P})\dot{P})$$
$$- J(q)^T \Lambda P \Lambda_{ref}^{-1} (K_{ref}(P - P_{ref}) + D_{ref}(\dot{P} - \dot{P}_{ref}) + F_{ref})$$
$$+ J(q)^T (\Lambda P \Lambda_{ref}^{-1} - I)F$$

[Expression 2]

$$\mu(P,\dot{P}) = J(q)^{-T} (c(q,\dot{q}) - M(q)J(q)^{-1}\dot{J}(q))J(q)^{-1}$$

Expressions (1) and (2) are mere examples of torque-based force control, and the present invention is not restricted to those expressions.

The force control portion 517 output the respective computed torque command values $\tau_{MFref1}$ through $\tau_{MFref6}$ to the respective motor controllers 531 through 536. Here, speed P (·) is obtained by differentiating position P by time, and acceleration P (··) is obtained by differentiating speed P (·). Therefore, in the first embodiment, the force control portion 517 obtains the speed P (·) of the tip of hand and the acceleration P (··) of the tip of hand from the position P of the tip of hand obtained as a result of measurement by the position measurement portion 515. It is also possible to have the position measurement portion 515 perform arithmetic operation to output the speed P (·) of the tip of hand and the acceleration P (··) of the tip of hand.

Based on the operation instruction received from the switching portion 502, the position command generation portion 504 transmits the position target value $P_{ref}$ as operation command to the position control portion 518. Based on the operation instruction received from the switching portion 502, the external command generation portion 505 forms data into a format corresponding to the external apparatus 323, and transmits a command to the external apparatus 323.

The position control portion 518 computes the angular command values $q_{ref1}$ through $q_{ref6}$ of the respective joints $J_1$ through $J_6$ by performing inverse kinematics computation based on the position target value $P_{ref}$ of the tip of hand, and outputs the respective angular command values $q_{ref1}$ through $q_{ref6}$ to the respective motor controllers 531 through 536.

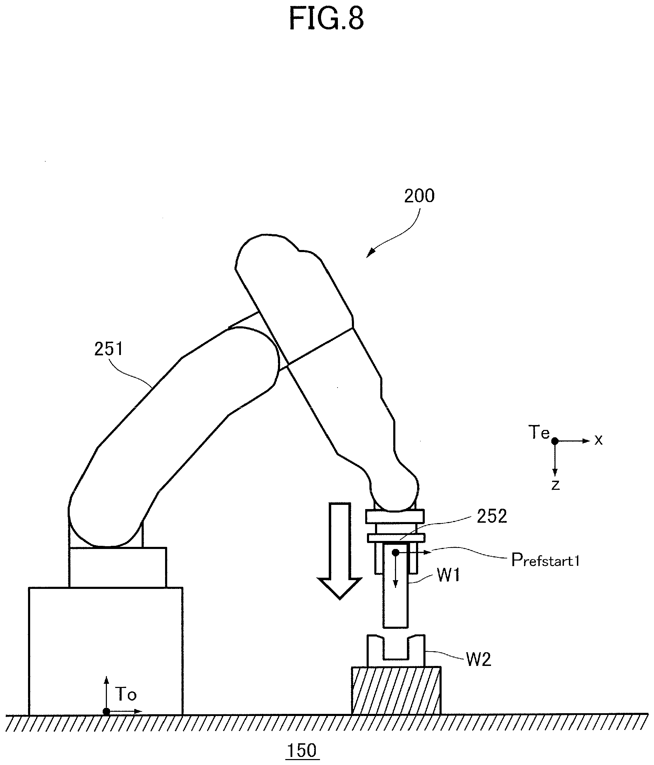

Now, the operations of the instruction portion 501 and the control portion 510 will be described with reference to specific examples. FIG. 8 is a schematic diagram illustrating a state immediately before performing assembling operation by the robot 200 according to the first embodiment. In the first embodiment, the robot hand 252 is moved downward by torque-based force control, and an operation of assembling a cylindrical workpiece W1 serving as a first workpiece held by the robot hand 252 to an annular workpiece W2 serving as a second workpiece is performed. Thereby, an article having workpiece W1 assembled to workpiece W2 is manufactured.

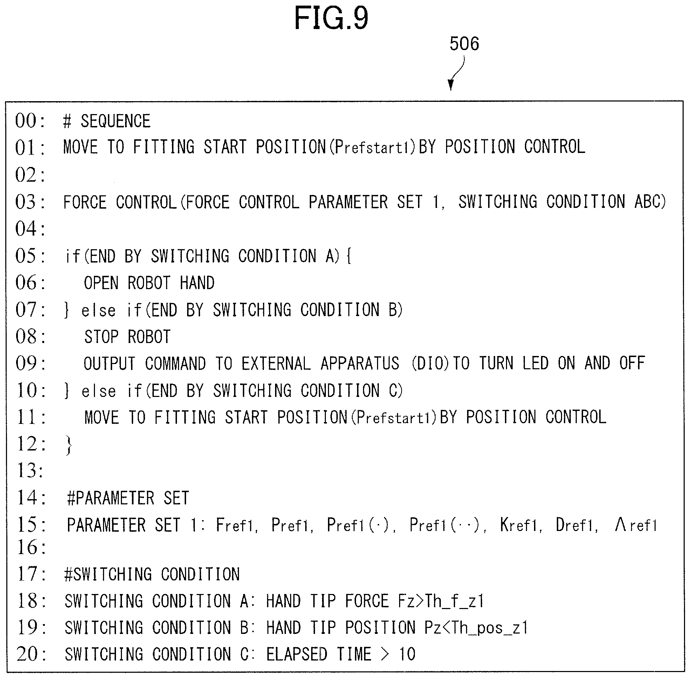

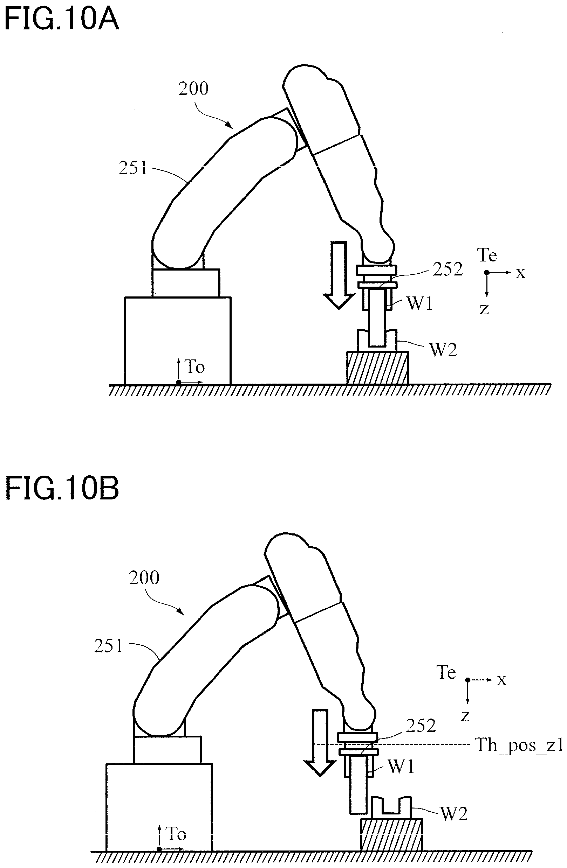

FIG. 9 is an explanatory view illustrating one example of the robot program 506 according to the first embodiment. Further, FIGs. 10A and 10B are schematic diagrams of the robot 200 for describing the assembling operation of the robot 200 operated in accordance with the robot program 506. Based on a statement on line 01, the switching portion 502 of the instruction portion 501 transmits an operation instruction to the position command generation portion 504 to perform operation by position control to the target position $P_{refstart1}$ taught in advance by the teaching pendant 400. The position command generation portion 504 transmits the target position $P_{refstart1}$ as operation command to the position control portion 518 of the control portion 510. Thereby, the position control portion 518 moves the tip of hand of the robot 200 to the target position $P_{refstart1}$.

Next, based on the statement on line 03, the switching portion 502 of the instruction portion 501 transmits an operation instruction to the force command generation portion 503 to start moving the tip of hand of the robot 200 from the position $P_{refstart1}$ to a downward direction of FIG. 8 by torque-based force control. The force command generation portion 503 transmits a parameter set 1 as operation command to the parameter setting portion 516, and transmits switching conditions A, B and C to the monitoring portion 511. Thereby, the instruction portion 501 instructs the control portion 510 to start feedback control by torque-based force control.

The parameter set 1 is a parameter group set by the operator to perform torque-based force control, and the values are described on line 15. The parameter set 1 includes a force target value $F_{ref1}$, a position target value $P_{ref1}$, a speed target value $P_{ref1}(\cdot)$, an acceleration target value $P_{ref1}(\cdot\cdot)$, a stiffness coefficient $K_{ref1}$, a viscosity coefficient $D_{ref1}$, and an inertia matrix $\Lambda_{ref1}$. Switching conditions A, B and C constitute a switching condition group for switching the operation of the robot 200, and individual switching conditions are described on lines 18 through 20. Specifically, on line 18, a condition stating that translational z component of the hand tip force F exceeds threshold Th_f_z1 is described as switching condition A. On line 19, a condition stating that position Pz of the translational z component of the tip of hand is smaller than threshold Th_pos_z1 is described as switching condition B. On line 20, a condition that elapsed time from point of time when torque-based force control has been started exceeds a threshold (10 [s]) is described as switching condition C. It is also possible to have a plurality of conditions written as one switching condition, such as {(Fz > Th_f_z1) and (elapsed time >10)}, or {(Fz>Th_f_z1) or (elapsed time > 10)}.

As described, the instruction portion 501 transmits the parameter set 1 to the control portion 510 in accordance with the robot program 506, and the control portion 510 performs feedback control of the operation of the robot 200 by torque-based force control using the parameter set 1.

When causing the control portion 510 to start torque-based force control, the instruction portion 501 transits a plurality of switching conditions A, B and C to the control portion 510. If the status of the robot 200 matches the switching condition A during torque-based force control, the monitoring portion 511 of the control portion 510 transmits the switching information indicating that the switching condition A has been matched to the instruction portion 501. Further, if the status of the robot 200 matches the switching condition B during torque-based force control, the monitoring portion 511 transmits a switching information indicating that the switching condition B has been matched to the instruction portion 501. Further, if the status of the robot 200 matches the switching condition C during torque-based force control, the monitoring portion 511 transmits a switching information indicating that the switching condition C has been matched to the instruction portion 501.

That is, the monitoring portion 511 monitors, as the status of the robot 200, the elapsed time t from the time measurement portion 512, the hand tip force F and the torque values $\tau_1$ through $\tau_6$ from the force measurement portion 514, the position P of the tip of hand from the position measurement portion 515, and the angular values $q_1$ through $q_6$. The monitoring portion 511 monitors these measured values, and if any one of these switching conditions A, B and C is satisfied, it transmits the switching information corresponding to that switching condition to the instruction portion 501.

If input of switching information indicating that switching condition A has been matched is received, the switching portion 502 of the instruction portion 501 transmits the operation command corresponding to that switching information to the control portion 510. Specifically, switching condition A is a condition where the translational z component of the hand tip force F exceeds threshold Th_f_z1, and as illustrated in FIG. 10A, it indicates that the bottom face of workpiece W1 has been assembled to the workpiece W2. Since switching condition A has been satisfied, based on the statements descried in lines 05 and 06, the switching portion 502 transmits an operation instruction to open the robot hand 252 to the force command generation portion 503, and the force command generation portion 503 transmits an operation command to the control portion 510. The control portion 510 switches the operation of the robot 200 in accordance with the received operation command to an operation to open the robot hand 252, and completes the assembling operation.

If input of switching information indicating that the switching condition B has been matched is received, the switching portion 502 of the instruction portion 501 transmits an operation command corresponding to the switching information to the control portion 510. Specifically, switching condition B is a condition where the position Pz of the tip of hand of the robot 200 in translational z direction becomes smaller than the threshold Th_pos_z1, and as illustrated in FIG. 10B, it indicates that assembly has failed. Since switching condition B is satisfied, the switching portion 502 transmits an operation instruction to stop the robot 200 based on the statements described in lines 07 through 09 to the force command generation portion 503, and transmits an operation instruction to turn the LED on and off with respect to the external apparatus 323 to the external command generation portion 505. The force command generation portion 503 transmits an operation command to the control portion 510, and the control portion 510 stops the operation of the robot 200 in accordance with the received operation command. Further, the external command generation portion 505 transmits an operation command to the external apparatus 323, and controls the operation of the external apparatus 323, that is, causes the external apparatus 323 to turn the LED on and off.

If switching information indicating that switching condition C has been matched is received, the switching portion 502 of the instruction portion 501 transmits an operation command corresponding to that switching information to the control portion 510. Specifically, switching condition C is a condition where elapsed time from the point of time when torque-based force control has been started exceeds a threshold (10 [s]). Since switching condition C is satisfied, based on the statements described in lines 10 and 11, the switching portion 502 transmits an operation instruction to move the tip of hand of the robot 200 to position $P_{refstart1}$ by position control to the position command generation portion 504. The position command generation portion 504 transmits an operation command to the control portion 510. The control portion 510 returns the tip of hand of the robot 200 by position control to the position $P_{refstart1}$ based on position control in accordance with the received operation command. That is, in accordance with the instruction of the instruction portion 501, the control portion 510 switches control from torque-based force control to position control as a switching of operation of the robot 200. As described, the switching between torque-based force control and position control can be performed more speedily by the cooperation of the instruction portion 501 and the control portion 510.

As described, according to the first embodiment, a two-part configuration composed of the instruction portion 501 that performs state transition and a control portion 510 that performs feedback control at a predetermined control cycle upon receiving an instruction from the instruction portion 501 is adopted, in accordance with the robot program 506 created by the user. Thereby, a process to perform interpretation of the robot program 506 having a high arithmetic operation load is no longer required to be performed by the control portion 510, such that the speed of control cycle of feedback control by torque-based force control can be increased. Therefore, torque-based force control of the robot 200 can be performed stably while corresponding to the switching of various operations of the robot 200. Further, according to the first embodiment, it becomes possible to increase the speed of the control cycle of feedback compared to a state where processing of the robot program and feedback control using a sensor value are performed by one process, and therefore, stability of control of the robot 200 is improved.

By having the control portion 510 perform feedback control based on the sensor information also in the instruction portion 501, the corresponding arithmetic operation load can be reduced, and excessive consumption of computer resources can be prevented.

According further to the first embodiment, the monitoring portion 511 of the control portion 510 notifies the switching information to the switching portion 502 in a state where the switching condition has been matched during torque-based force control. The switching portion 502 can switch the operation of the robot 200 flexibly by performing conditional branching based on the notified switching information. Thereby, the application range of the assembling operation using torque-based force control is expanded, and it becomes possible to handle complex assembling operations.

Second Embodiment

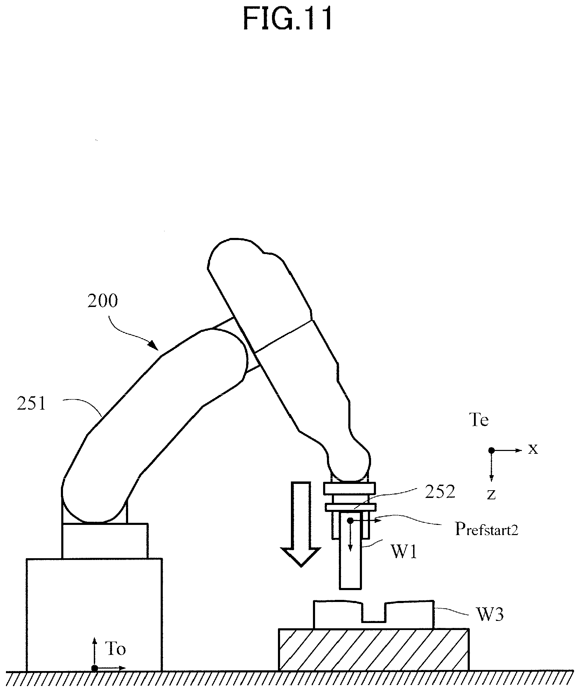

Next, a robot system according to the second embodiment will be described. FIG. 11 is a schematic diagram illustrating a state immediately before performing an assembling operation by a robot according to the second embodiment. In the second embodiment, an operation is performed to move a robot hand 252 downward and assemble a cylindrical workpiece W1 serving as a first workpiece held by the robot hand 252 to an annular workpiece W3 serving as a second workpiece by torque-based force control. Thereby, an article having the workpiece W1 assembled to the workpiece W3 is manufactured. At that time, a complex control processing that branches into multiple stages according to the satisfied switching condition can be realized by the instruction portion 501 and the control portion 510.

According to the second embodiment, a case where the parameter associated with force control is switched as the switching of operation of the robot 200. The configurations and functions of the robot system according to the second embodiment is similar to those of the first embodiment, but the contents of the robot program created by the user and the second workpiece serving as the target of assembly are different. According to the second embodiment, the position of a recess portion on a workpiece W3 on which the workpiece W1 is to be assembled is not accurately defined. Therefore, the assembling operation is performed by the following sequence. For sake of simplified description, the operation of the robot 200 will be stopped when conditions other than the normal system are satisfied.

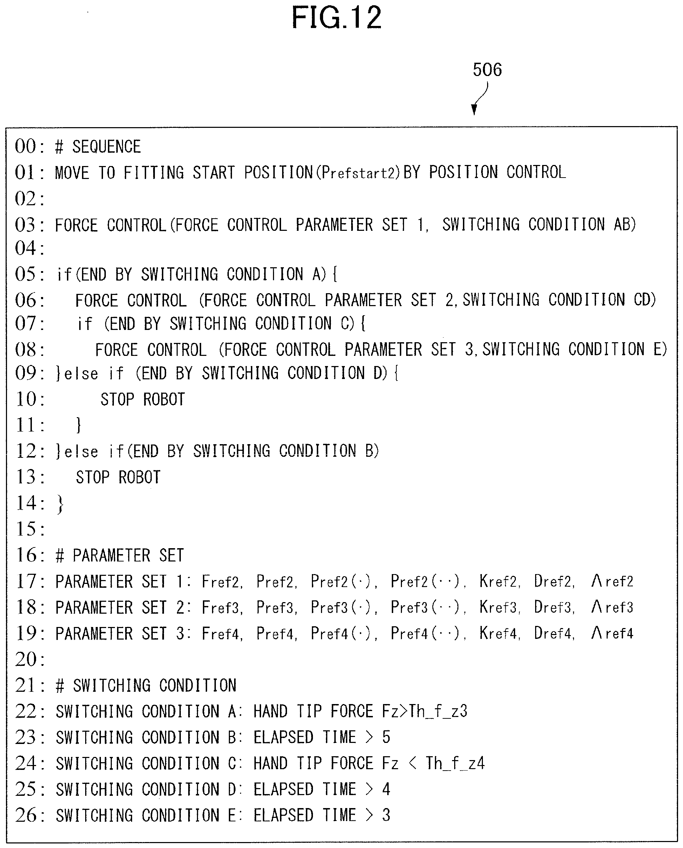

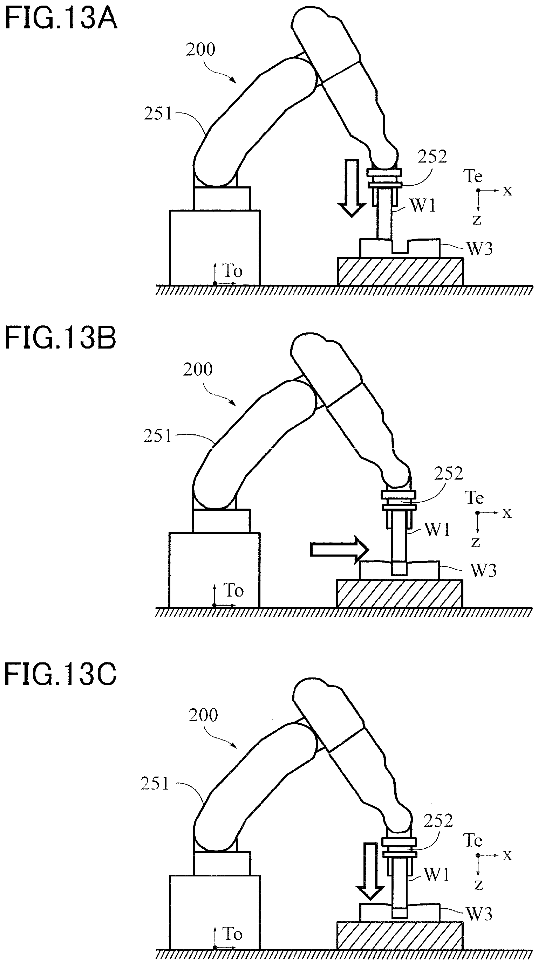

FIG. 12 is an explanatory view illustrating one example of the robot program 506 according to the second embodiment. FIGs. 13A, 13B and 13C are schematic diagrams of the robot 200, illustrating the assembling operation of the robot 200 that operates in accordance with the robot program 506. The switching portion 502 of the instruction portion 501 transmits an operation instruction to the position command generation portion 504 to operate by position control to a target position $P_{refstart2}$ taught in advance by the teaching pendant 400 based on a statement on line 01. The position command generation portion 504 transmits the target position $P_{refstart2}$ to the position control portion 518 of the control portion 510 as operation command. Thereby, the position control portion 518 moves the position P of the tip of hand of the robot 200 to the target position $P_{refstart2}$.

Next, the switching portion 502 of the instruction portion 501 transmits an operation instruction to the force command generation portion 503 to start moving the tip of hand of the robot 200 from the position $P_{refstart2}$ to a downward direction in FIG. 11 by torque-based force control based on a statement on line 03. The force command generation portion 503 transmits a parameter set 1 as the operation command to the parameter setting portion 516, and also transmits switching conditions A and B to the monitoring portion 511. Thereby, the instruction portion 501 causes the control portion 510 to start feedback control by torque-based force control. Thereby, the instruction portion 501 transmits a parameter set 1 to the control portion 510 in accordance with the robot program 506, and the control portion 510 uses the parameter set 1 to perform feedback control of the operation of the robot 200 by torque-based force control.

Now, the second embodiment includes a plurality of parameter sets 1, 2 and 3 and a plurality of switching conditions A, B, C, D and E. Parameter sets 1 through 3 are described on lines 17 through 19. Parameter set 1 includes a force target value $F_{ref2}$, a position target value $P_{ref2}$, a speed target value $P_{ref2}$ (·), an acceleration target value $P_{ref2}$ (··), a stiffness coefficient $K_{ref2}$, a viscosity coefficient $D_{ref2}$, and an inertia matrix $\Lambda_{ref2}$. Parameter set 2 includes a force target value $F_{ref3}$, a position target value $P_{ref3}$, a speed target value $P_{ref3}$ (·), an acceleration target value $P_{ref3}$ (··), a stiffness coefficient $K_{ref3}$, a viscosity coefficient $D_{ref3}$, and an inertia matrix $\Lambda_{ref3}$. Parameter set 3 includes a force target value $F_{ref4}$, a position target value $P_{ref4}$, a speed target value $P_{ref4}$ (·), an acceleration target value $P_{ref4}$ (··), a stiffness coefficient $K_{ref4}$, a viscosity coefficient $D_{ref4}$, and an inertia matrix $\Lambda_{ref4}$.

The switching conditions A through E are described on lines 22 through 26. Switching condition A is a condition where the translational z component of the hand tip force F exceeds threshold Th_f_z3. Switching condition B is a condition where an elapsed time from the point of time when torque-based force control has been started exceeds a threshold (5 [s]). Switching condition C is a condition where the transitional z component of the hand tip force F is smaller than threshold Th_f_z4. Switching condition D is a condition where the elapsed time from the point of time when torque-based force control has been started exceeds a threshold (4 [s]). Switching condition E is a condition where the elapsed time from the point of time when torque-based force control has been started exceeds a threshold (3 [s]). Switching conditions C and D are associated with switching condition A. Further, switching condition E is associated with switching condition C. That is, switching conditions A through E are associated in a multistage tree structure.

In a state where the instruction portion 501 causes the control portion 510 to start torque-based force control based on parameter set 1, the instruction portion 501 transmits a plurality of switching conditions A and B to the control portion 510. In a state where the status of the robot 200 matches switching condition A during torque-based force control, the monitoring portion 511 of the control portion 510 transmits a switching information indicating that switching condition A has been matched to the instruction portion 501. Further, in a state where the status of the robot 200 has matched switching condition B during torque-based force control, the monitoring portion 511 transmits a switching information indicating that switching condition B has been matched to the instruction portion 501.

In a state where the switching information indicating that switching condition A has been matched is received, the switching portion 502 of the instruction portion 501 transmits an operation command corresponding to the switching information to the control portion 510. Specifically, switching condition A is a condition that the translational z component of the hand tip force F exceeds threshold Th_f_z3, and as illustrated in FIG. 13A, it indicates that the bottom face of workpiece W1 has abutted against workpiece W3.

Since switching condition A is satisfied, the switching portion 502 transmits an operation instruction to the force command generation portion 503 based on the statements described on lines 05 and 06, and the force command generation portion 503 transmits an operation command to the control portion 510. This operation command is a parameter set 2, and the force control portion 517 uses the new parameter set 2 to perform feedback control based on torque-based force control. That is, as illustrated in FIG. 13B, probing operation is performed by torque-based force control toward a right direction in the drawing. Now, in a state where the instruction portion 501 transmits the parameter set 2 serving as the operation command to the control portion 510, new switching conditions C and D associated with the switching condition A determined to have matched the status of the robot 200 are transmitted to the monitoring portion 511 of the control portion 510.

In a state where a switching information indicating that switching condition C has been matched is received, the switching portion 502 of the instruction portion 501 transmits an operation command corresponding to the switching information to the control portion 510. Specifically, switching condition C is a condition where the transitional z component of the hand tip force F is smaller than threshold Th_f_z4, and as illustrated in FIG. 13B, it indicates that the bottom face of workpiece W1 has entered the recess portion of the workpiece W3.

Since switching condition C is satisfied, the switching portion 502 transmits an operation instruction to the force command generation portion 503 based on statements described on lines 07 and 08, and the force command generation portion 503 transmits an operation command to the control portion 510. This operation command is a parameter set 3, and the force control portion 517 performs feedback control by torque-based force control using the new parameter set 3. That is, as illustrated in FIG. 13C, the force control portion 517 performs fitting operation by torque-based force control in the downward direction. Here, in a state where the instruction portion 501 transmits the parameter set 3 serving as the operation command to the control portion 510, the instruction portion 501 transmits a new switching condition E associated with the switching condition C determined to have matched the status of the robot 200 to the monitoring portion 511 of the control portion 510.

As described, according to the second embodiment, in a state where the switching condition has been matched during torque-based force control, the control portion 510 notifies the switching information to the switching portion 502, and the switching portion 502 performs conditional branching based on the notified switching information. Based on the operation of the instruction portion 501 and the control portion 510, it becomes possible to switch the parameter associated with force control once or more than once. That is, complex switching operations in multiple stages, such as switching from initial parameter set 1 to parameter set 2 in a state where switching condition A has been matched, and switching further from parameter set 2 to parameter set 3 in a state where switching condition C has been matched, is facilitated.

Third Embodiment

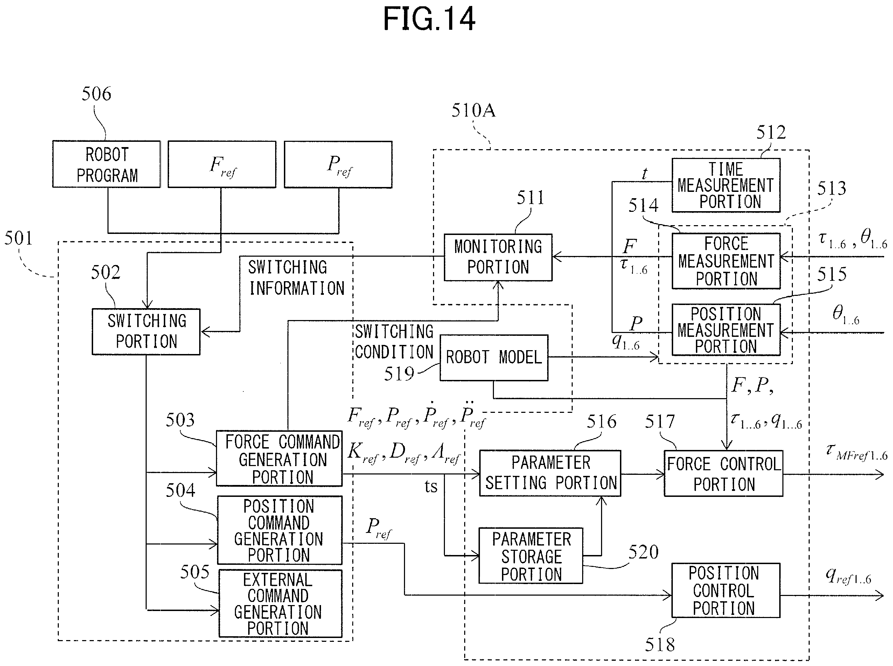

Next, a robot system according to a third embodiment will be described. FIG. 14 is a control block diagram of an instruction portion 501 and a control portion 510A according to the third embodiment. According to the control portion 510A of the third embodiment, a parameter storage unit 520 is added to the control portion 510A illustrated in FIG. 7. Further, information on transition time ts is added to the output from the force command generation portion 503.

The parameter storage unit 520 maintains the parameter before switching. By maintaining the parameter before switching, if switching of parameters associated with force control occurs, the parameter before switching and the parameter after switching are interpolated by an interpolation function at the parameter setting portion 516. Thus, it becomes possible to prevent sudden change of parameter. As a method for performing interpolation, for example, interpolation functions such as linear interpolation, cubic polynomial, Sigmoid function and the like can be used, but the present invention is not restricted thereto.

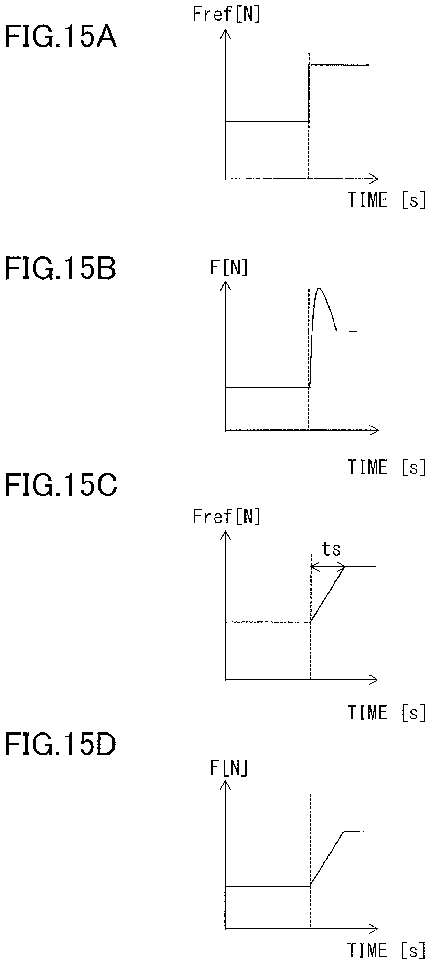

For simplification, a case will be described of a case where only a force target value $F_{ref}$, which is one of the parameters, is subjected to interpolation. FIG. 15A is a schematic diagram illustrating a time variation of a force target value $F_{ref}$ of the tip of hand in a state where interpolation is not performed. FIG. 15B is a schematic diagram illustrating a time variation of the hand tip force F in a state where interpolation is not performed. FIG. 15C is a schematic diagram illustrating a time variation of the force target value $F_{ref}$ of the tip of hand in a state where interpolation is performed. FIG. 15D is a schematic diagram illustrating the time variation of the hand tip force F in a state where interpolation is performed.

As illustrated in FIG 15A, if interpolation is not performed, the force target value $F_{ref}$ is switched in steps. Therefore, as illustrated in FIG. 15B, the hand tip force F overshoots with respect to the force target value $F_{ref}$. On the other hand, according to the third embodiment, as illustrated in FIG. 15C, interpolation of the force target value $F_{ref}$ within transition time ts is performed using an interpolation function. In the example of FIG. 15C, linear interpolation is performed within transition time ts. Therefore, it becomes possible to prevent the torque command values $\tau_{MFref1}$ through $\tau_{MFref6}$ computed by force control portion 517 from being changed significantly. As a result, as illustrated in FIG. 15D, it becomes possible to prevent the hand tip force F from overshooting. As described, overshooting of the hand tip force F can be prevented according to the third embodiment, and operation of the robot 200 can be performed more stably.

Forth Embodiment

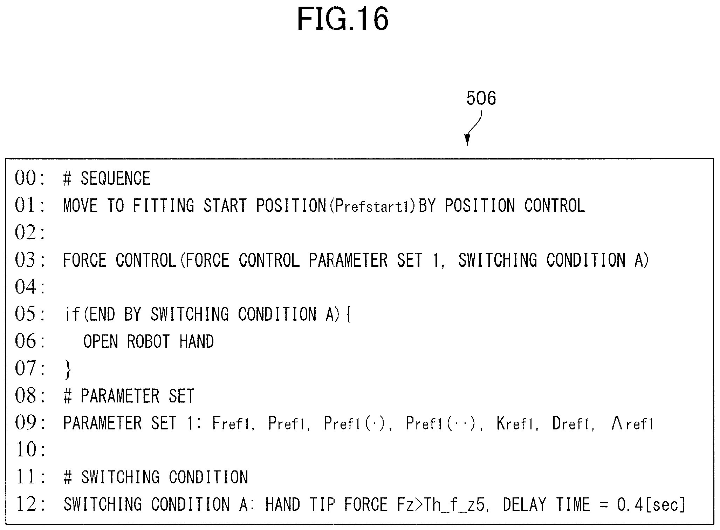

Now, a robot system according to a fourth embodiment will be described. FIG. 16 is an explanatory view illustrating an example of a robot program 506 according to a fourth embodiment. In the fourth embodiment, a delay time function is added to the monitoring portion 511, and information on delay time is added to the output from the force command generation portion 503 to the monitoring portion 511.

A delay time is described as switching condition A on line 12 of the robot program 506. Specifically, it means that determination of translational z component of the hand tip force F will not be performed during a predetermined time of 0.4 [s] after starting torque-based force control in the monitoring portion 511.

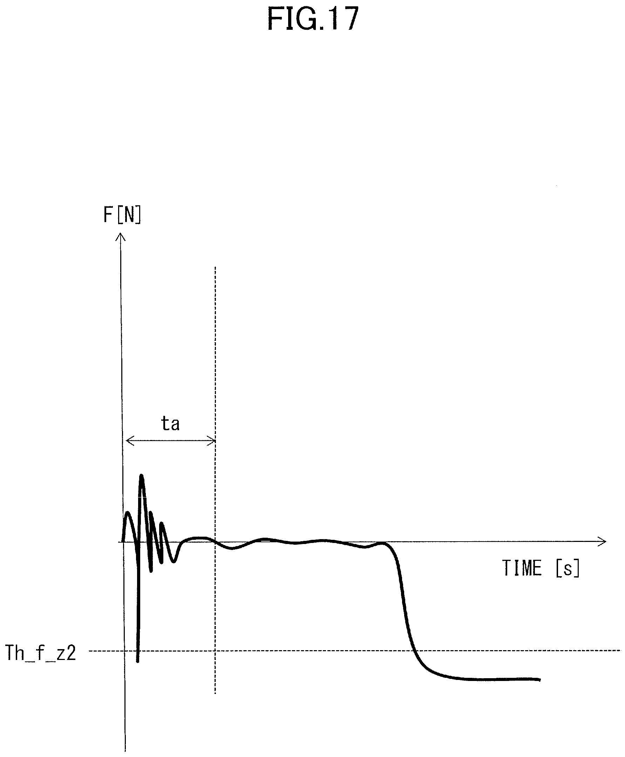

FIG. 17 is a conceptual diagram illustrating a determination on whether the switching condition has been matched or not according to the fourth embodiment. FIG. 17 illustrates a case where the switching condition is a condition where one component out of six elements of the hand tip force F is smaller than threshold Th_f_z2.

In a state where torque-based force control is performed after position control, as illustrated in FIG. 17, the fluctuation of the hand tip force F may become significant due to the change of control immediately after starting torque-based force control. In a state where the status of the robot 200 has matched the switching condition after a predetermined time ta has elapsed from a point of time when a switching condition has been received from the instruction portion 501, the monitoring portion 511 of the control portion 510 transmits a switching information to the instruction portion 501. In the example illustrated in FIGs. 16 and 17, the predetermine time ta is delay time of 0.4 [s]. The determination operation performed by the monitoring portion 511 of the control portion 510 can be stabilized by setting a masking period in which the determination operation is not performed for a predetermined time ta, for example, 0.4 [s],

As described, according to the fourth embodiment, the monitoring portion 511 of the control portion 510 has a delay function, such that the operator can control the start time of determination of the switching condition by entering a statement in the robot program 506. Thus, the monitoring portion 511 will disregard the significant fluctuation of the hand tip force F or the hand tip position P that may occur at the start of operation of the robot 200, and the stability of control of the robot 200 can be improved.

The present invention is not restricted to the embodiments described above, and various modifications are possible within the scope of the present invention. Further, the effects described in the embodiments are mere examples of the most preferable effects caused by the present invention. The effects of the present invention are not restricted to those described in the embodiments.

The present invention can also be realized by providing a program that realizes one or more functions of the above-described embodiments via a network or a storage medium to a system or an apparatus, and having one or more processors in a computer of the system or the apparatus perform a process of reading and executing the program. The present invention can also be realized by a circuit realizing one or more functions (such as an ASIC).

According to the above-described embodiment, the CPU 301 has a plurality of cores, and the plurality of cores realize the functions of the instruction portion and the control portion, but it is also possible to realize the functions of the instruction portion and the control portion by a plurality of CPUs or a plurality of computers. Moreover, even if the functions of the instruction portion and the control portion are realized by one CPU having only one core, the present invention can be realized by configuring the system to enable a plurality of processes, that is, a plurality of application software, to be executed independently. That is, the CPU can function as the instruction portion by executing the first process and also function as the control portion by executing the second process. From the point of view of arithmetic operation load, it is more preferable to realize the functions of the instruction portion and the control portion by a plurality of cores, a plurality of CPUs or a plurality of computers than realizing the functions of the instruction portion and the control portion by one CPU having only one core.

According to the above-described embodiment, a case has been described where the robot arm is a vertical articulated robot arm, but the present invention is not restricted to this example. The robot arm can be, for example, a horizontal articulated robot arm, a parallel-linked robot arm, an orthogonal robot, and so on.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A robot control apparatus (300) includes an instruction portion (501), and a control portion (510). The instruction portion (501) is configured to transmit a switching condition to the control portion (510) configured to perform feedback control in accordance with the robot program. In a state where a status of the robot (200) matches the switching condition, the control portion (510) transmits information indicating that the status of the robot (200) has matched the switching condition to the instruction portion (501), the instruction portion (501) transmits an operation command corresponding to the information to the control portion (510), and the control portion (510) switches the operation of the robot (200) in accordance with the operation command.

**Claims**

1. A robot control apparatus (300) comprising:

an instruction portion (501) configured to instruct an operation of a robot (200) in accordance with a robot program; and
a control portion (510) configured to perform feedback control of the operation of the robot (200) in accordance with an instruction from the instruction portion (501), based on a torque sensor value of the robot (200) and an encoder value of the robot (200),
wherein the instruction portion (510) is configured to transmit a switching condition to the control portion (510) configured to perform feedback control in accordance with the robot program,
in a state where a status of the robot (200) matches the switching condition, the control portion (510) transmits information indicating that the status of the robot (200) has matched the switching condition to the instruction portion (501), the instruction portion (501) transmits an operation command corresponding to the information to the control portion (510), and the control portion (510) switches the operation of the robot (200) in accordance with the operation command.

2. The robot control apparatus (300) according to claim 1, wherein in a state where the instruction portion (501) causes the control portion (510) to start the feedback control, the instruction portion (501) transmits the switching condition to the control portion (510).

3. The robot control apparatus (300) according to claim 1, wherein in a state where the instruction portion (501) transmits the operation command to the control portion (510), the instruction portion (501) transmits a new switching condition associated with the switching condition that has matched the status of the robot (200).

4. The robot control apparatus (300) according to any one of claims 1 through 3, wherein in a state where the status of the robot (200) has matched the switching condition after a predetermined time has elapsed from receiving input of the switching condition, the control portion (510) transmits the information to the instruction portion (501).

5. The robot control apparatus (300) according to any one of claims 1 through 4, wherein the instruction portion (501) is configured to control an operation of an external apparatus (323) according to the information received from the control portion (510).

6. The robot control apparatus (300) according to any one of claims 1 through 5, wherein the control portion (510) is configured to switch from a first control in which the operation of the robot (200) is controlled based on the torque sensor value of the robot (200) and the encoder value of the robot (200) to a second control in which the operation of the robot (200) is controlled based on the encoder value of the robot (200), as the switching of the operation of the robot (200).

7. The robot control apparatus (300) according to any one of claims 1 through 6, wherein the control portion (510) is configured to switch a parameter used in the feedback control as the switching of the operation of the robot (200).

8. The robot control apparatus (300) according to claim 7, wherein the instruction portion (501) is configured to transmit a new parameter to the control portion (510) as the operation command.

9. The robot control apparatus (300) according to claim 7 or 8, wherein the parameter includes at least either one of a force target value and a position target value at a tip of hand of the robot (200).

10. The robot control apparatus (300) according to any one of claims 7 through 9, wherein the parameter includes a coefficient of an arithmetic operation used in the feedback control.

11. The robot control apparatus (300) according to any one of claims 7 through 10, wherein, in a state where the parameter is being switched, the control portion (510) is configured to perform interpolation of the parameter before switching and the parameter after switching using an interpolation function.

12. A robot system (100) comprising:

the robot control apparatus (300) according to any one of claims 1 through 11; and

the robot (200).

13. A robot control method configured to control a robot (200) by an instruction portion (501) configured to instruct an operation of a robot (200) in accordance with a robot program, and a control portion (510) configured to perform feedback control of the operation of the robot (200) in accordance with an instruction from the instruction portion (501), based on a torque sensor value of the robot (200) and an encoder value of the robot (200), the robot control method comprising:

transmitting, by the instruction portion (501), a switching condition to the control portion (510) configured to perform feedback control in accordance with the robot program;

transmitting, by the control portion (510), information indicating that a status of the robot (200) has matched the switching condition to the instruction portion (501) in a state where the status of the robot (200) matched the switching condition;

transmitting, by the instruction portion (501), an operation command corresponding to the information to the control portion (510); and

switching, by the control portion (510), the operation of the robot (200) in accordance with the operation command.

14. An assembly manufacturing method of an article comprising performing an operation of assembling a first workpiece to a second workpiece using a robot (200) based on the robot control method according to claim 13.

# FIG.1

# FIG.2

EP 3 351 353 A1

# FIG.3

# FIG.4

```
                    ┌─────────────┐
                    │    START    │
                    └─────────────┘
                           │
                           ▼
        ┌──────────────────────────────────┐
        │  SET FORCE TARGET VALUE AND       │──── S1
        │  POSITION TARGET VALUE            │
        └──────────────────────────────────┘
                           │
                           ▼
        ┌──────────────────────────────────┐
        │   COMPUTE TORQUE COMMAND VALUE    │──── S2
        └──────────────────────────────────┘
                           │
                           ▼
        ┌──────────────────────────────────┐
        │ PERFORM ENERGIZATION CONTROL OF MOTOR │── S3
        └──────────────────────────────────┘
                           │
                           ▼
        ┌──────────────────────────────────┐
        │         GENERATE TORQUE           │──── S4
        └──────────────────────────────────┘
                           │
                           ▼
        ┌──────────────────────────────────┐
        │  ACQUIRE ANGULAR VALUES AND       │──── S5
        │  TORQUE VALUES                    │
        └──────────────────────────────────┘
                           │
                           ▼
        ┌──────────────────────────────────┐
        │      COMPUTE HAND TIP FORCE       │──── S6
        └──────────────────────────────────┘
                           │
                           ▼
  No          ╱◇◇◇◇◇◇◇◇◇◇◇◇◇◇╲
 ┌────────────   DRIVE COMPLETED?    ────── S7
 │            ╲◇◇◇◇◇◇◇◇◇◇◇◇◇◇╱
 │                         │ Yes
 │                         ▼
 │                  ┌─────────────┐
 │                  │     END     │
 │                  └─────────────┘
```

# FIG.5

```
              ┌─────────────┐
              │    START    │
              └─────────────┘
                     │
                     ▼
      ┌──────────────────────────────┐  ─S11
      │   SET POSITION TARGET VALUE   │
      └──────────────────────────────┘
                     │
                     ▼
      ┌──────────────────────────────┐  ─S12
      │  COMPUTE ANGULAR COMMAND VALUE │
      └──────────────────────────────┘
                     │
                     ▼
   ┌────────────────────────────────────┐  ─S13
   │ PERFORM ENERGIZATION CONTROL OF MOTOR │
   └────────────────────────────────────┘
                     │
                     ▼
      ┌──────────────────────────────┐  ─S14
      │        GENERATE TORQUE        │
      └──────────────────────────────┘
                     │
                     ▼
      ┌──────────────────────────────┐  ─S15
      │      ACQUIRE ANGULAR VALUE    │
      └──────────────────────────────┘
                     │
                     ▼
  No         ╱─────────────────╲   ─S16
  ◄──────────   DRIVE COMPLETED?   
             ╲─────────────────╱
                     │ Yes
                     ▼
              ┌─────────────┐
              │     END     │
              └─────────────┘
```

# FIG.6A

INSTRUCTION PORTION  501

SWITCHING CONDITION →

CONTROL PORTION  510

# FIG.6B

INSTRUCTION PORTION  501

← SWITCHING INFORMATION

CONTROL PORTION  510

# FIG.6C

INSTRUCTION PORTION  501

OPERATION COMMAND →

CONTROL PORTION  510

# FIG.6D

CONTROL PORTION  510

SWITCHING OF OPERATION →

ROBOT  200

# FIG.7

EP 3 351 353 A1

# FIG.8

200

251

Te
x
z

252

Prefstart1

W1

W2

To

150

# FIG.9

506

```
00: # SEQUENCE
01: MOVE TO FITTING START POSITION(Prefstart1)BY POSITION CONTROL
02:
03: FORCE CONTROL(FORCE CONTROL PARAMETER SET 1, SWITCHING CONDITION ABC)
04:
05: if(END BY SWITCHING CONDITION A){
06:    OPEN ROBOT HAND
07: } else if(END BY SWITCHING CONDITION B)
08:    STOP ROBOT
09:    OUTPUT COMMAND TO EXTERNAL APPARATUS (DIO)TO TURN LED ON AND OFF
10: } else if(END BY SWITCHING CONDITION C)
11:    MOVE TO FITTING START POSITION(Prefstart1)BY POSITION CONTROL
12: }
13:
14: #PARAMETER SET
15: PARAMETER SET 1: Fref1, Pref1, Pref1($\cdot$), Pref1($\cdot\cdot$), Kref1, Dref1, $\Lambda$ref1
16:
17: #SWITCHING CONDITION
18: SWITCHING CONDITION A: HAND TIP FORCE Fz>Th_f_z1
19: SWITCHING CONDITION B: HAND TIP POSITION Pz<Th_pos_z1
20: SWITCHING CONDITION C: ELAPSED TIME > 10
```

EP 3 351 353 A1

FIG.10A

FIG.10B

# FIG.11

# FIG.12

506

```
00: # SEQUENCE
01: MOVE TO FITTING START POSITION(Prefstart2)BY POSITION CONTROL
02:
03: FORCE CONTROL(FORCE CONTROL PARAMETER SET 1, SWITCHING CONDITION AB)
04:
05: if(END BY SWITCHING CONDITION A){
06:    FORCE CONTROL (FORCE CONTROL PARAMETER SET 2,SWITCHING CONDITION CD)
07:    if (END BY SWITCHING CONDITION C){
08:       FORCE CONTROL (FORCE CONTROL PARAMETER SET 3,SWITCHING CONDITION E)
09: }else if (END BY SWITCHING CONDITION D){
10:       STOP ROBOT
11:    }
12: }else if(END BY SWITCHING CONDITION B)
13:    STOP ROBOT
14: }
15:
16: # PARAMETER SET
17: PARAMETER SET 1: Fref2, Pref2, Pref2(·), Pref2(··), Kref2, Dref2, Λref2
18: PARAMETER SET 2: Fref3, Pref3, Pref3(·), Pref3(··), Kref3, Dref3, Λref3
19: PARAMETER SET 3: Fref4, Pref4, Pref4(·), Pref4(··), Kref4, Dref4, Λref4
20:
21: # SWITCHING CONDITION
22: SWITCHING CONDITION A: HAND TIP FORCE Fz>Th_f_z3
23: SWITCHING CONDITION B: ELAPSED TIME > 5
24: SWITCHING CONDITION C: HAND TIP FORCE Fz < Th_f_z4
25: SWITCHING CONDITION D: ELAPSED TIME > 4
26: SWITCHING CONDITION E: ELAPSED TIME > 3
```

## FIG.13A

## FIG.13B

## FIG.13C

# FIG.14

FIG.15A

Fref[N]

TIME [s]

FIG.15B

F[N]

TIME [s]

FIG.15C

Fref[N]

ts

TIME [s]

FIG.15D

F[N]

TIME [s]

# FIG.16

EP 3 351 353 A1

506

```
00:  # SEQUENCE
01:  MOVE TO FITTING START POSITION(Prefstart1)BY POSITION CONTROL
02:
03:  FORCE CONTROL(FORCE CONTROL PARAMETER SET 1, SWITCHING CONDITION A)
04:
05:  if(END BY SWITCHING CONDITION A){
06:     OPEN ROBOT HAND
07:  }
08:  # PARAMETER SET
09:  PARAMETER SET 1: Fref1, Pref1, Pref1(·), Pref1(··), Kref1, Dref1, Λref1
10:
11:  # SWITCHING CONDITION
12:  SWITCHING CONDITION A: HAND TIP FORCE Fz>Th_f_z5, DELAY TIME = 0.4[sec]
```

# FIG.17

**EP 3 351 353 A1**

Europäisches
Patentamt

European
Patent Office

Office européen
des brevets

# EUROPEAN SEARCH REPORT

Application Number

EP 18 15 0138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 859 999 A2 (SEIKO EPSON CORP [JP]) 15 April 2015 (2015-04-15) * the whole document * ----- | 1-14 | INV. B25J9/16 |
| A,D | US 2015/314441 A1 (TSUCHIDA YUKINOBU [JP] ET AL) 5 November 2015 (2015-11-05) * the whole document * ----- | 1-14 | |

TECHNICAL FIELDS
SEARCHED      (IPC)

B25J

The present search report has been drawn up for all claims

| Place of search | Date of completion of the search | Examiner |
|---|---|---|
| The Hague | 3 May 2018 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

## ANNEX TO THE EUROPEAN SEARCH REPORT
## ON EUROPEAN PATENT APPLICATION NO.

EP 18 15 0138

03-05-2018

| Patent document cited in search report | | Publication date | Patent family member(s) | | Publication date |
|---|---|---|---|---|---|
| EP 2859999 | A2 | 15-04-2015 | CN | 104552291 A | 29-04-2015 |
| | | | CN | 104827469 A | 12-08-2015 |
| | | | EP | 2859999 A2 | 15-04-2015 |
| | | | US | 2015105907 A1 | 16-04-2015 |
| US 2015314441 | A1 | 05-11-2015 | CN | 105034010 A | 11-11-2015 |
| | | | DE | 102015005213 A1 | 05-11-2015 |
| | | | JP | 5845311 B2 | 20-01-2016 |
| | | | JP | 2015208836 A | 24-11-2015 |
| | | | US | 2015314441 A1 | 05-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5845311 B